# EUROPÄISCHE PATENTSCHRIFT

(11) **EP 3 124 958 B1**
(45) Veröffentlichungstag und Bekanntmachung des Hinweises auf die Patenterteilung: **08.04.2020**
(21) Anmeldenummer: 16181245.8
(22) Anmeldetag: 26.07.2016
(51) Int. Cl.: B32B 5/02, B32B 5/30, B32B 7/06, B32B 7/12, B32B 27/06, B32B 27/38, B29C 70/02, B29C 70/08, B32B 3/02, C08J 5/10, G01N 23/223, G01N 21/21, G01N 21/65, G01N 21/64, B32B 7/05, G01N 21/94, G01N 21/84, B32B 27/18, C08J 5/04

(54) **VERBUNDWERKSTOFF UND VERFAHREN ZUR DETEKTION VON KONTAMINATIONEN AUF EINER OBERFLÄCHE EINES VERBUNDWERKSTOFFS**
COMPOSITE MATERIAL AND METHOD FOR DETECTING CONTAMINATION ON A SURFACE OF A COMPOSITE MATERIAL
MATIÈRE COMPOSITE ET PROCÉDÉ DE DÉTECTION DE CONTAMINATIONS SUR UNE SURFACE D'UNE MATIÈRE COMPOSITE

(30) Priorität: 31.07.2015 DE 102015009729
(43) Veröffentlichungstag der Anmeldung: 01.02.2017
(73) Patentinhaber: Airbus Defence and Space GmbH, 82024 Taufkirchen (DE)
(72) Erfinder: Helwig, Andreas, 80469 München (DE); Göbel, Johann, 81547 München (DE); Wachinger, Georg, 83026 Rosenheim (DE); Meer, Thomas, 85658 Egmating (DE)
(74) Vertreter: Kastel, Stefan

(56) Entgegenhaltungen:
- EP-A1- 2 730 914
- EP-A1- 2 730 914
- EP-A1- 2 792 470
- DE-A1- 3 942 226
- GB-A- 1 202 330
- US-A- 5 759 658
- US-A- 5 849 130
- US-A1- 2006 109 454
- US-A1- 2007 252 084

## Beschreibung

Die Erfindung betrifft ein Verbundwerkstoff, welcher Fasern und eine Materialmatrix umfasst. Ferner befasst sich die Erfindung mit einem Verfahren zur Detektion von Kontaminationen auf einer Oberfläche eines Verbundwerkstoffs, wobei der Verbundwerkstoff Fasern und eine Materialmatrix aufweist.

Die Festigkeit einer Klebung bei einem Verbundwerkstoff wird negativ von Oberflächenkontaminationen beeinflusst. Mittels Laser-Induced-Breakdown Spectroscopy (LIBS) ist es möglich, das chemische Element Silikon von Siloxanbasierten Kontaminationen zu unterscheiden. Es ist jedoch nicht möglich, zwischen Silikonen und Silikaten zu unterscheiden, was für die Beurteilung der Oberfläche für nachfolgende Klebevorgänge aber notwendig ist. Fourier-Transform-Infrared-Spectroscopy (FTIR) ist nicht sensitiv genug, um geringe Trennmittelreste nachzuweisen. Eine "elektronische Nase", wie sie in DE 10 2011 102 055 A1 beschrieben wird, befindet sich noch in Entwicklung und ist für den Nachweis schwerflüchtiger Trennmittelreste nicht geeignet, da die Kontaminationen sich nicht in die Gasphase überführen lassen oder die Temperaturen dabei so hoch sind, dass die Verbundwerkstoffoberfläche thermisch geschädigt wird.

EP 2 792 470 A1 offenbart ein Verfahren zur Herstellung eines fasererstärkten Verbundmaterials, das das Aufbringen einer Anstrichschicht, die Pigment enthält, auf einen Bogen aus einem Fasergewebebogen, insbesondere Glasfasergewebebogen, das Trocken der Anstrichschicht auf dem Bogen und anschließend das Einbetten des Bogens in ein Harz umfasst. Die Anstrichschicht kann metallische Flocken oder Partikel enthalten, die dem Endprodukt eine dreidimensionale ästhetische Wirkung verleihen.

US 5,759,658 offenbart eine Verbundplatte, die eine Harzmatrix einschließt, in die abwechselnde Schichten von Partikeln und flexiblen Bögen eingebettet sind.

US 5,849,130 betrifft einen thermisch leitfähigen Film, bei dem eine Vielzahl von Fasern in ein Polymermatrixmaterial eingebettet sind. Die Fasern haben eine größere Wärmeleitfähigkeit als die Polymermatrix und können mit einer reflektierenden Material beschichtet sein, wodurch die Fasern wie parallel angeordnete, die Lichttransmission erhöhende Spiegel wirken.

EP 2 730 914 A1 betrifft ein Verfahren zur Herstellung eines Prepregs, das unter anderem das Imprägnieren eines Carbonfaserbündels mit einem Harz und anschließend das Nachweisen von Defekten in der Harzoberfläche umfasst.

US 2007/0252084 A1 offenbart ein Oberflächenuntersuchungssystem, das ein Werkzeug umfasst, das UV/VIS/IR-Licht verwendet, um das Vorhandensein von Verunreinigungen auf der Oberfläche eines Verbundmaterials nachzuweisen. Für diesen Nachweis werden die unterschiedlichen Reflexionseigenschaften der die saubere Oberfläche bildenden Materialien und der die Oberfläche verunreinigenden Materialien verglichen.

Der Erfindung liegt die Aufgabe zugrunde, ein System bereitzustellen, mittels welchem Kontaminationen auf einer Oberfläche eines Verbundwerkstoffs zuverlässig detektiert werden können.

Die Aufgabe wird durch den Verbundwerkstoff gemäß Anspruch 1 und das Verfahren gemäß Anspruch 6 gelöst.

Vorteilhafte Ausgestaltungen der Erfindung sind in den abhängigen Ansprüchen angegeben.

Die Erfindung betrifft ein Verbundwerkstoff umfassend Fasern, eine Materialmatrix und eine Reflexionsvorrichtung. Die Reflexionsvorrichtung ist derart ausgebildet und angeordnet, dass wenigstens ein Flächenbereich einer Oberfläche oder Seitenfläche des Verbundwerkstoffs reflektierend ist. Die Reflexionsvorrichtung weist eine reflektierende Lage auf, die ein reflektierendes Gewebe und/oder ein reflektierender Filz ist.

Es ist bevorzugt, dass die reflektierende Lage an den Fasern angeordnet ist.

Es ist bevorzugt, dass die reflektierende Lage zwischen der Materialmatrixschicht und den Fasern angeordnet ist.

Es ist bevorzugt, dass das reflektierendes Gewebe ein reflektierender Stoff ist.

Der Verbundwerkstoff ist insbesondere ein Faserverbundwerkstoff, wie beispielsweise ein kohlenstofffaserverstärkter Kunststoff, auch carbonfaserverstärkter Kunststoff (CFK) genannt.

Die Fasern können insbesondere Kohlenstofffasern sein. Die Materialmatrix wird insbesondere durch eine Kunststoffmatrix gebildet, wie beispielsweise Epoxidharz. Bevorzugt ist die Materialmatrix transparent ausgebildet.

Bevorzugt ist der grundlegende Aufbau des Verbundwerkstoffs hinsichtlich den Fasern und der Materialmatrix ein solcher, wie aus dem Stand der Technik bekannt ist. Die Fasern sind bevorzugt in der Materialmatrix eingebettet. Dazu können die Fasern mit dem verflüssigten Werkstoff der Materialmatrix getränkt werden. Insbesondere befindet sich eine durchgehende Schicht der Materialmatrix oberhalb und unterhalb der Fasern.

Die Reflexionsvorrichtung ist insbesondere für elektromagnetische Wellen reflektierend, wobei sich die Wellenlängen der reflektierten Strahlung im sichtbaren Bereich, im infraroten Bereich und/oder im UV-Bereich bewegen können. Bevorzugt ist die Reflexionsvorrichtung derart reflektierend, dass die reflektierte Strahlung für optische Messverfahren geeignet ist. Die optischen Messverfahren können zum Beispiel Ellipsometrie, Interferometrie, Raman-Messungen sowie Röntgenfluoreszenz sein.

Alternativ oder zusätzlich, kann die Reflexionsvorrichtung auch für Röntgenstrahlung reflektierend ausgebildet sein, sodass sich beispielsweise die Reflexionsvorrichtung für die Röntgenfluoreszenz eignet.

Die Oberfläche des Verbundwerkstoffs wird insbesondere durch die Materialmatrix gebildet. Der Flächenbereich der Oberfläche des Verbundwerkstoffs kann zusammenhängend oder durch mehrere Einzelbereiche gebildet sein. Ferner kann die gesamte Oberfläche des Verbundwerkstoffs reflektierend ausgestaltet sein, sodass die Reflexionsvorrichtung sich entlang der gesamten Oberfläche des Verbundwerkstoffs erstreckt. Die Reflexionsvorrichtung wird insbesondere an den Bereichen der Oberfläche des Verbundwerkstoffs vorgesehen, an denen in einem späteren Schritt, ein Klebemittel zum Kleben aufgebracht wird.

Ein bevorzugter Vorteil der Erfindung ist, dass mittels der Reflexionsvorrichtung Kontaminationen auf der Oberfläche des Verbundwerkstoffs mit Hilfe optischer Messverfahren bestimmt werden können. Bisher war dies nicht möglich, da sich die Oberfläche der bisher bekannten Verbundwerkstoffe nicht als Untergrund oder Hintergrund für die äußerst sensitiven optischen Messungen eignete. Die Fasern, insbesondere Kohlenstofffasern, streuen Strahlung diffus oder absorbieren bestimmte Wellenlängen. Das Materialmatrixsystem emittiert unter Umständen Lumineszenz-Licht, wenn es mit bestimmten Energien angeregt wird.

Durch das Vorsehen der Reflexionsvorrichtung werden vorzugsweise diese Nachteile vermieden, da die Reflexionsvorrichtung eine reflektierende Schicht bereitstellt, sodass die für die optische Messung benötigte reflektierte Strahlung nicht mehr diffus gestreut wird, sondern reflektiert wird. Ferner verhindert die Reflexionsvorrichtung insbesondere, dass bestimmte Wellenlängen von den Fasern absorbiert werden, da das für die optische Messung benötigte Licht die Fasern aufgrund der Reflexionsvorrichtung nicht mehr erreicht.

Ferner kann auch die Lumineszenz der Materialmatrix bei entsprechender Anordnung der Reflexionsvorrichtung verringert oder komplett vermieden werden, da durch die Reflexionsvorrichtung die Lumineszenz anregende Strahlung vor Erreichen der entsprechenden Abschnitte der Materialmatrix reflektiert werden.

Darüber hinaus ist es von Vorteil, dass aufgrund der Reflektivität der Reflexionsvorrichtung besonders viel ausgesandtes Licht reflektiert wird und damit für die Messung zur Verfügung steht. Es ist somit möglich, optische Schichtdickenmessungen, welche Messungen der Kontamination auf der Oberfläche entsprechen, durchzuführen.

Es ist bevorzugt, dass die Materialmatrix transparent ist und in der Materialmatrix Partikel angeordnet sind, wobei zumindest ein Teil der Partikel zur Bildung der Reflektionsvorrichtung eine reflektierende Oberfläche aufweisen.

Transparent soll insbesondere bedeuten, dass die Materialmatrix für die für die optische Messung benötigte Strahlung transparent und damit nicht absorbierend ist. Die Partikel werden insbesondere der Materialmatrix beigemischt und sind somit in dem Verbundwerkstoff verteilt.

Die Partikel werden vorzugsweise zur Verbesserung unterschiedlicher Eigenschaften des Verbundwerkstoffs beigemischt. Zum Beispiel kann durch die Hinzugabe der Partikel die thermische und/oder elektrische Leitfähigkeit des Verbundwerkstoffs verbessert werden. Dazu eignen sich zum Beispiel Graphenpartikel. Ferner kann durch die Zugabe von Partikeln die Duktilität des Verbundwerkstoffs verbessert werden und/oder Rissausbreitungen vermindert oder unterbunden werden. Die Partikel haben insbesondere eine Größe im Mikrometerbereich, beispielsweise einen größten Durchmesser zwischen 5 µm und 40 µm, insbesondere zwischen 10 µm und 30 µm.

Zumindest ein Teil der Partikel wird mit einer reflektierenden Oberfläche versehen, sodass die Vielzahl der reflektierenden Partikel die Reflexionsvorrichtung bildet. Insbesondere wird der Anteil der reflektierenden Partikel derart gewählt, dass die Reflektivität der reflektierenden Partikel für die optische Messung ausreichend ist. Alternativ können alle Partikel mit einer reflektierenden Oberfläche versehen sein.

Durch das Einmischen der Partikel in die Materialmatrix ergibt sich somit eine homogene reflektierende Schicht aus reflektierenden Partikel, welche insbesondere in der Materialmatrix vorgesehen ist. Die Partikel können entweder zur Verbesserung der Eigenschaften des Verbundwerkstoffs, sowie oben dargestellt, und/oder zur Bildung der Reflexionsvorrichtung vorgesehen werden. Insbesondere dann, wenn Partikel zur Verbesserung der physikalischen Eigenschaften des Verbundwerkstoffs ohnehin zugegeben werden, kann diese Alternative zur Bildung der Reflexionsvorrichtung verwendet werden. Zur Herstellung des Verbundwerkstoffs ist somit kein separater Schritt notwendig.

Es ist bevorzugt, dass die Partikel zur Bildung der reflektierenden Oberfläche gefärbt, und/oder beschichtet, insbesondere metallisch beschichtet, sind.

Vorzugsweise wird die Farbe der Partikel im Hinblick auf die zu reflektierende Wellenlänge gewählt. Alternativ oder zusätzlich können die Partikel beschichtet werden. Die Farbe der Beschichtung wird vorzugsweise ebenfalls im Hinblick auf die zu reflektierende Strahlung gewählt.

Eine metallische Beschichtung eignet sich besonders, da sie über einen breiten Wellenlängenbereich reflektierend ist. Das Vorsehen einer Beschichtung erlaubt es, Partikel zur Bildung der Reflexionsvorrichtung zu verwenden, welche sich nicht oder nur schwer färben lassen oder deren Farbe durch das Material der Partikel bestimmt ist.

Der Verbundwerkstoff kann alternativ oder zusätzlich zur Beigabe der Partikel mit einer reflektierenden Oberfläche vorgesehen werden. Die reflektierende Lage ist wie zuvor geschildert, insbesondere für die Strahlung reflektierend, welche für die optische Messung verwendet wird. Die reflektierende Lage ist insbesondere zwischen der Materialmatrixschicht und den Fasern angeordnet. Somit wird die Strahlung für die optische Messung vor Erreichen der Fasern reflektiert, sodass das für die optische Messung nachteilige Verhalten der Fasern ausgeblendet werden kann.

Das reflektierende Gewebe und/oder der reflektierende Filz sind insbesondere mit dem Material der Materialmatrix getränkt. Zur Entstehung der Reflektivität sind beispielsweise die Fasern des Gewebes oder des Filz selbst reflektierend oder das Gewebe und/oder der Filz sind mit einer reflektierenden Oberfläche versehen.

Es ist bevorzugt, dass zur Bildung der Reflexionsvorrichtung die Oberfläche des Verbundwerkstoffs reflektierend ausgebildet ist.

Bei dieser Ausgestaltung ist die Oberfläche reflektierend, sodass die für die optische Messung notwendige Strahlung weder in die Materialmatrix noch zu den Fasern eindringt. Somit kann durch die reflektierende Ausgestaltung der Oberfläche die für die optische Messung nachteiligen Eigenschaften der Fasern und der Materialmatrix von der Messung ausgeschlossen werden.

Es ist bevorzugt, dass die Oberfläche des Verbundwerkstoffs zur Bildung der Reflexionsvorrichtung mit einer reflektierenden Schicht versehen ist und/oder reflektierend beschichtet ist.

Wie zuvor geschildert, kann die Reflexionsvorrichtung nur in einem Flächenbereich, welcher insbesondere der Fläche entspricht, welche auf Kontamination untersucht werden soll, oder über die gesamte Oberfläche vorgesehen sein. Die reflektierende Schicht oder die Beschichtung bildet insbesondere die Oberfläche des Verbundwerkstoffs.

Zur Bildung der reflektierenden Oberfläche wird entweder eine reflektierende Schicht aufgebracht, welche insbesondere auf die Oberfläche des unbearbeiteten Verbundwerkstoffs geklebt wird. Die reflektierende Schicht kann eine Folie sein. Alternativ oder zusätzlich kann die Oberfläche beschichtet werden, beispielsweise durch Aufbringen eines Materials, sodass eine stoffliche Bindung zwischen der Reflexionsbeschichtung der Oberfläche besteht. Beispielsweise kann die Beschichtung eine Farbbeschichtung oder eine Partikelbeschichtung sein. Insbesondere ist die Beschichtung eine Trennmittelbeschichtung des Peel Ply.

Es ist bevorzugt, dass die reflektierende Schicht eine Trennfolie ist.

Die Trennfolie dient insbesondere dazu, dass Entformen des Verbundwerkstoffs aus der Form zu erleichtern.

Ferner betrifft die Erfindung ein Verfahren zur Detektion von Kontaminationen auf einer Oberfläche des Verbundwerkstoffs. Der Verbundwerkstoff weist Fasern und eine Materialmatrix auf. Das Verfahren umfasst die folgenden Schritte:
Vorsehen einer Reflexionsvorrichtung in dem Verbundwerkstoff wenigstens an einem Flächenbereich der Oberfläche des Verbundwerkstoffs und/oder Vorsehen einer Reflexionsvorrichtung an dem Verbundwerkstoff wenigstens an einem Flächenbereich der Oberfläche des Verbundwerkstoffs durch Versehen der Oberfläche mit einer reflektierenden Schicht und/oder durch reflektierendes Beschichten (10) und
Detektieren von Kontaminationen auf der Oberfläche des Verbundwerkstoffs (10) mit Hilfe optischer Messverfahren durch Messen der von der Reflexionsvorrichtung (16) reflektierten Strahlung.

Der Verbundwerkstoff weist insbesondere die oben beschriebenen Eigenschaften und Vorteile auf. Die Kontaminationen auf der Oberfläche des Verbundwerkstoffs können beispielsweise Trennmittel zum Entformen des Verbundwerkstoffs aus seiner Form sein.

Insbesondere kann mit Hilfe des Verfahrens festgestellt werden, ob eine Kontamination vorliegt, und falls ja, kann diese detektiert und quantifiziert werden. Werden Kontaminationen detektiert, können entsprechende Gegenmaßnahmen eingeleitet werden, beispielsweise das Entfernen der Kontamination oder die Reduktion der Kontamination unter einen Grenzwert. Insbesondere dient die Detektion von Kontaminationen dazu, eine strukturelle Klebung und/oder eine geklebte Reparatur an dem Verbundwerkstoff zu verbessern, da, falls eine Kontamination vorliegt, die Qualität der Klebung oder der geklebten Reparatur verschlechtert ist.

Das Vorsehen der Reflexionsvorrichtung in/oder an dem Verbundwerkstoff kann während des Herstellens des Verbundwerkstoffs erfolgen oder in einen sich daran anschließenden Schritt. Die Reflexionsvorrichtung weist insbesondere die beschriebenen Vorteile und Eigenschaften auf.

Durch das Vorsehen der Reflexionsvorrichtung können, wie oben beschrieben, optische Messverfahren zur Detektion von Kontaminationen verwendet werden. Diese eignen sich besonders gut, sehr dünne Rückstände auf der Oberfläche ohne Beschädigung der Oberfläche nachzuweisen. Unter optischen Messverfahren sollen insbesondere all jene Verfahren verstanden werden, bei welchen elektromagnetische Strahlung verwendet wird.

Es ist bevorzugt, dass die optischen Messverfahren Ellipsometrie, Interferometrie, Raman-Messung, Röntgenfluoreszenz und/oder Laserfluoreszenz umfassen.

Bevorzugt wird eine der beschriebenen Messverfahren verwendet. Alternativ können mehrere der oberen beschriebenen optischen Messverfahren verwendet werden, je nachdem auf welche Art von Kontamination die Oberfläche des Verbundwerkstoffs untersucht werden soll. Mit Hilfe der genannten Techniken lassen sich insbesondere die Art und Menge von Trennmittelrückständen an der Oberfläche des Verbundwerkstoffs bestimmen.

Es ist bevorzugt, dass zum Vorsehen der Reflexionsvorrichtung Partikel mit einer reflektierenden Oberfläche hergestellt werden und in die Materialmatrix eingebracht werden.

Das Herstellen der Partikel mit reflektierenden Oberflächen ist aus dem Stand der Technik bekannt. Wie zuvor geschildert, können die Partikel mit der reflektierenden Oberfläche mit Partikeln ohne reflektierender Oberfläche vermischt werden. Vorzugsweise werden die Partikel mit dem flüssigen Material der Materialmatrix vermischt. Die Fasern werden dann mit diesem Partikel-Material-Gemisch getränkt.

Es ist bevorzugt, dass die Fasern zum Vorsehen der Reflexionsvorrichtung mit einer reflektierenden Lage bedeckt werden und anschließend die Fasern mit der reflektierenden Lage mit der Materialmatrix versehen werden.

Insbesondere werden die Fasern angeordnet und mit der reflektierenden Lage bedeckt. Im Anschluss daran wird die Kombination aus Fasern und reflektierender Lage mit dem flüssigen Material der Materialmatrix getränkt. Die reflektierende Lage weist insbesondere die oben beschriebenen Vorteile und Eigenschaften auf.

Es ist bevorzugt, dass zum Vorsehen der Reflexionsvorrichtung die Oberfläche des Verbundwerkstoffs mit einer reflektierenden Schicht versehen wird und/oder reflektierend beschichtet wird.

Hinsichtlich der reflektierenden Schicht und der reflektierenden Beschichtung gelten die oben angestellten Überlegungen und Vorteile.

Im Folgenden wird die Erfindung anhand der beigefügten Zeichnungen näher erläutert. Dabei zeigen:
- Fig. 1: eine Draufsicht auf einen Verbundwerkstoff;
- Fig. 2: einen Ausschnitt eines Querschnitts durch den Verbundwerkstoff gemäß Fig. 1
- Fig. 3: einen Ausschnitt eines Querschnitts eines Verbundwerkstoffs gemäß einer weiteren Ausführungsform;
- Fig. 4: ein Ausschnitt eines Querschnitts durch einen Verbundwerkstoff gemäß einer weiteren Ausführungsform;

Ein Verbundwerkstoff 10 weist eine Oberfläche 12 auf. Im Bereich eines Flächenbereichs 14 der Oberfläche 12 ist eine Reflexionsvorrichtung 16 vorgesehen. Um Kontaminationen 18 auf der Oberfläche 12 in dem Flächenbereich 14 zu messen, ist eine optische Messvorrichtung 20 vorgesehen.

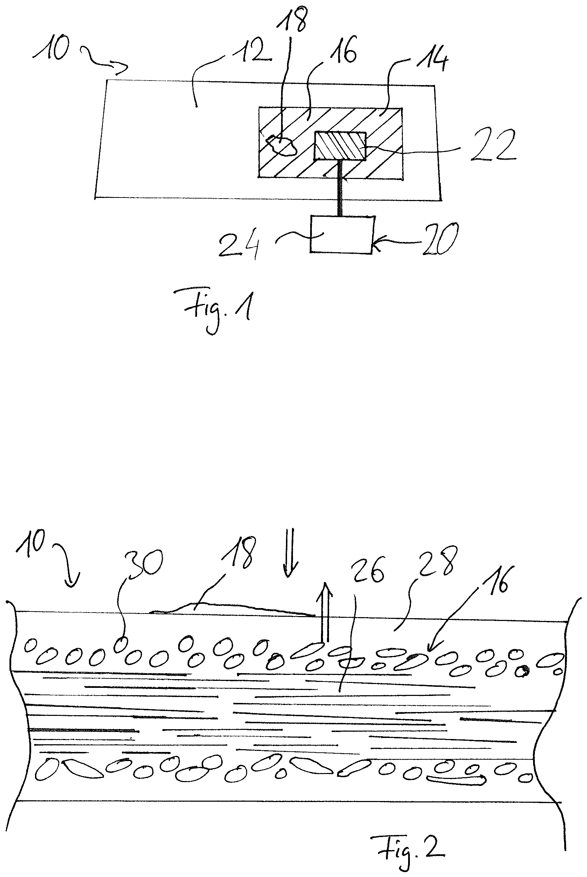

Die optische Messvorrichtung 20 weist einen Messkopf 22 und eine Auswerteeinheit 24 auf. Der Messkopf 22 wird über den Flächenbereich 14 bewegt und detektiert Kontaminationen 18 mit Hilfe optischer Messverfahren. In der in Figur 1 gezeigten Ausführungsform ist der Messkopf 22 ausgebildet, Interferometriemessungen durchzuführen. Dies ist in dem Flächenbereich 14 möglich, da der Verbundwerkstoff 10 im Bereich des Flächenbereichs 14 mit der reflektierenden Reflexionsvorrichtung 16 versehen ist, sodass die von dem Messkopf 22 ausgestrahlte elektromagnetische Strahlung von der Reflexionsvorrichtung 16 zurück in den Messkopf 22 reflektiert wird. Dadurch wird das Messsignal verstärkt und die Lumineszenz des Verbundwerkstoffs 10 unterdrückt.

Die Kontamination 18 ist im vorliegenden Fall ein Trennmittel zum Entformen des Verbundwerkstoffs 10 von seiner Form. Die Kontamination 18 weist eine Dicke im Mikrometerbereich/Nanometerbereich auf.

Der Flächenbereich 14 ist ein Bereich der Oberfläche 12, auf welchem eine Klebung vorgenommen werden soll. Die Qualität der Klebung ist vermindert, wenn Kontaminationen 18 nicht vollständig entfernt werden. Zur Detektion der Kontamination 18 wird die Messvorrichtung 20 verwendet. Wird eine Kontamination 18 detektiert, kann die Kontamination 18 im Anschluss an die Messung entfernt werden.

Figur 2 stellt einen Ausschnitt eines Querschnitts des Verbundwerkstoffs 10 gemäß einer ersten Ausführungsform dar. Der Verbundwerkstoff 10 weist Fasern 26, eine Materialmatrix 28 und eine Reflexionsvorrichung 16 auf. Die Fasern 26 sind in der Art eines Gewebes angeordnet und in der gezeigten Ausführungsform Kohlenstofffasern.

Die Materialmatrix 28 ist aus Harz hergestellt, in welche Partikel 30 aufgenommen sind. Zur Herstellung werden die Partikel 30 mit dem flüssigen Material der Materialmatrix 28 vermischt und anschließend ausgehärtet.

Ein Teil der Partikel 30 ist mit einer reflektierenden Oberfläche versehen. Die Partikel 30 mit der reflektierenden Oberfläche bilden die Reflexionsvorrichtung 16 gemäß der ersten Ausführungsform. Durch die Vermischung der Partikel 30 mit der Materialmatrix 28 bildet sich so eine homogene Verteilung der mit der reflektierenden Oberfläche versehenen Partikel 30, sodass diese Partikel 30 eine reflektierende Schicht bilden. Einfallendes Licht, in Fig. 2 durch den linken Pfeil dargestellt, wird an den Partikeln 30 reflektiert, wie in Fig. 2 durch den rechten Pfeil dargestellt.

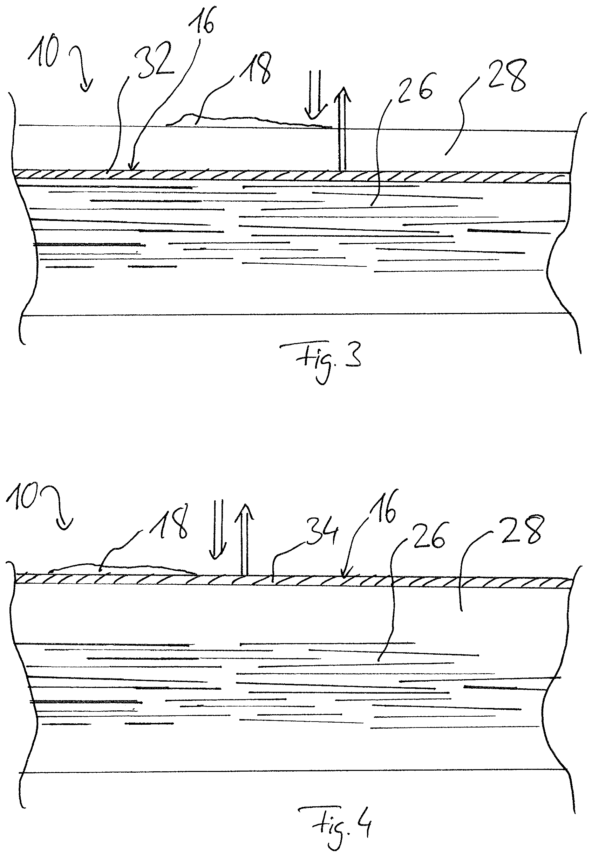

Figur 3 zeigt einen Ausschnitt eines Querschnitts durch einen Verbundwerkstoff 10 gemäß einer weiteren Ausführungsform. Der Verbundwerkstoff 10 gemäß Figur 3 stimmt mit dem Verbundwerkstoff 10 gemäß Figur 2 überein, bis auf die folgenden Unterschiede:
Anstelle der Partikel 30 wird in den Verbundwerkstoff 10 gemäß Figur 3 eine reflektierende Lage 32 zur Bildung der Reflexionsvorrichtung 16 vorgesehen. Die reflektierende Lage 32 ist auf der Seite des Verbundwerkstoffs 10, welche auf Kontaminationen 18 untersucht werden soll, auf die Fasern 26 aufgebracht.

Die Herstellung des Verbundwerkstoffs 10 erfolgt dadurch, dass die reflektierende Lage 32 auf die Fasern 26 aufgebracht wird und die Kombination aus Fasern 26 und reflektierender Lage 32 mit dem flüssigen Material der Materialmatrix 28 getränkt wird.

Die reflektierende Lage 32 ist in dieser Ausführungsform ein reflektierendes Gewebe und zwar ein reflektierender Stoff. Einfallendes Licht zur optischen Messung, welche in Figur 3 durch den linken Pfeil dargestellt ist, wird an der reflektierenden Lage 32 reflektiert, wie dies durch den rechten Pfeil dargestellt ist.

Figur 4 zeigt einen Ausschnitt eines Querschnitts durch einen Verbundwerkstoff 10 gemäß einer weiteren Ausführungsform. Der Verbundwerkstoff gemäß Figur 4 stimmt mit den Verbundwerkstoffen 10 gemäß Figuren 2 und 3 bis auf die folgenden Unterschiede überein.

Die Reflexionsvorrichtung 16 wird im Verbundwerkstoff 10 gemäß Figur 4 durch eine reflektierende Schicht 34 gebildet. Die reflektierende Schicht 34 ist auf die Materialmatrix 28 aufgebracht. Die reflektierende Schicht 34 ist in der gezeigten Ausführungsform eine Trennfolie. Licht, das vom dem Messkopf 22 ausgesandt wird, wie dies durch den linken Pfeil in Figur 4 dargestellt ist, wird an der reflektierenden Schicht 34 reflektiert, wie dies durch den rechten Pfeil in Figur 4 dargestellt ist. Somit gelangt das Messlicht weder zu der Materialmatrix 28 noch zu den Fasern 26.

Der Verbundwerkstoff 10 hat folgende Funktionsweise:
Der Messkopf 22 sendet Licht in Richtung des Verbundwerkstoffes 10 aus. Im Vergleich zum Verbundwerkstoff 10 aus dem Stand der Technik, wird das Licht jedoch an der Reflexionsvorrichtung 16 reflektiert und nicht wie im Stand der Technik absorbiert oder diffus gestreut. Somit ist die reflektierte Strahlung stärker, wodurch das Messsignal größer ist.

Darüber hinaus kann bei der in Figur 4 gezeigten Ausführungsform des Verbundwerkstoffs 10 die Anregung von Lumineszenz der Materialmatrix 29 verhindert werden, da die Messstrahlung nicht in die Materialmatrix 28 eindringt. Auch wenn das Messlicht in die Materialmatrix 28 eindringt und Lumineszenz erzeugt, ist das reflektierte Licht aufgrund der Reflektivität der Reflexionsvorrichtung 16 derart intensiv, dass eine Messung mittels Interferometrie möglich ist.

Im Folgenden wird die Erfindung nochmals kurz beschrieben:
Im Kontext des structural bonding wird immer wieder der Bedarf an Prüftechniken zur Detektion von Kontaminationen 18 auf Oberflächen 12 von Verbundwerkstoffen 10 genannt. Derzeit befinden sich potentielle Methoden lediglich im Entwicklungsstadium und weisen jeweils spezifische Nachteile auf. Als Anwendungsbereich der Erfindung werden die Fertigung von geklebten Verbundwerkstoffen10 sowie die klebebasierte Reparatur von Verbundwerkstoffen 10 angesehen.

Die Festigkeit einer Klebung wird negativ von oberflächlichen Kontaminationen 18 bzw. Trennmittelrückständen beeinflusst. Während der Fertigung von CFK-Verbundwerkstoffen 10 werden Entformungsmittel verwendet. Nach dem Entformen des Verbundwerkstoffs 10 verbleiben die Trennmittel als Kontamination 18 auf der Oberfläche 12 des Verbundwerkstoffs 10. Zur Prüfung, ob eine Oberfläche 12 trennmittelfrei ist, wird eine Prüftechnik benötigt, welche die Art und Menge der Trennmittelrückstände an der Oberfläche 12 bestimmt.

Direkte Messungen der Kontaminationen 18 an der Oberfläche 12 erweisen sich aufgrund der geringen Schichtdicken der Trennmittel als schwierig. Allerdings gibt es optische Messverfahren (teilweise aus der Halbleiterindustrie), die sich für die Detektion geringer Schichtdicken / Moleküllagen eignen. Als Beispiel seien hier die Messverfahren der Ellipsometrie, der Interferometrie, der Raman-Messung sowie der Röntgen- und Laser Fluoreszenz genannt.

Dabei erwiesen sich in der Vergangenheit diese Messmethoden als ungeeignet, da die im Fertigungsprozess entstehende Oberfläche 12 des Verbundwerkstoffs 10 sich nicht als Untergrund/Hintergrund für eine äußerst sensitive, optische Messung eignet. Kohlenstofffasern streuen Strahlung diffus, absorbieren bestimmte Wellenlängen und das Harzsystem der Materialmatrix 28 emittiert Lumineszenz-Licht, wenn es mit bestimmten Energien angeregt wird. Dies alles macht eine optische Messmethode unmöglich.

Auf der Suche nach neuen, verbesserten Verbundwerkstoffen 10 hat man damit begonnen unter anderem der Materialmatrix 28 Partikel 30 beizumengen, die die Eigenschaften des Verbundwerkstoffs 10 hinsichtlich unterschiedlicher Gesichtspunkte verbessern können. Z. B. erhofft man sich durch Zugabe von Graphen die thermische oder elektrische Leitfähigkeit zu verbessern. Ein anderer Ansatz ist durch Zugabe von bestimmten Partikeln 30, die Duktilität des Verbundwerkstoffs 10 zu verbessern und gegebenenfalls Rissausbreitungen zu unterbinden. Diese Partikel 30 werden dem Harz der Materialmatrix 28 beigemischt und verteilen sich im Verbundwerkstoff 10.

Die Neuerung der Erfindung liegt nun darin, die Oberfläche 12 des Verbundwerkstoffs 10 so zu adaptieren, dass sie sich nach dem Fertigungsprozess als Grundlage /Unterlage/ Hintergrund für eine optische Messung eignet. Zum Beispiel wäre es möglich die dem Harz beigemischten Partikel 30 so anzupassen / zu färben / zu beschichten (z. B. metallisch), dass die resultierende Oberfläche verspiegelt /reflektierend wird. Die Reflexion wurde z. B. das Ramansignal verstärken und eine Lumineszenz des CFK-Matrixmaterials 28 unterbinden/dämpfen. Auch andere optische Schichtdickenmessungen wären mit einer definiert reflektierenden Oberfläche 12 möglich.

Eine weitere Möglichkeit die Oberfläche 12 eines CFK-Verbundwerkstoffs 10 für eine optische Messung vorzubereiten ist es, an den relevanten Stellen (Stellen an denen geklebt werden soll, bzw. Stellen an denen keine Kontamination vorliegen darf, also an Stellen an denen gemessen werden muss) eine reflektierenden Schicht auf die oberste Kohlefaserlage aufzubringen, oder einen reflektierenden Stoff /Gewebe /Filz einzulegen. Nach dem Fertigungsschritt ist der gesamte Verbundwerkstoff 10 mit optisch durchlässigem Harz bedeckt. Die beschichteten/behandelten/eingelegten Bereiche sind optisch reflektierend und ermöglichen somit eine geeignete Messung.

Eine weitere Möglichkeit die Oberfläche 12 des CFK-Verbundwerkstoffs 10 für eine optische Messung vorzubereiten ist es, die oberste bzw. unterste Lage des Verbundwerkstoffs 10 gänzlich mit einer reflektierenden Lage 32 zu bedecken, bzw. die abschließende GFK- / CFK-Lage reflektierend zu beschichten.

Zusammenfassend gibt es drei Möglichkeiten zur Anpassung des Verbundwerkstoffs 10:
1. Anpassung der Materialmatrix 28 durch geeignete Partikel 30;
2. Anpassung durch geeignetes Beschichten der obersten/untersten/äußeren Schicht/Lage und/oder durch Einlegen von geeigneten Schichten 32 / Stoffen / beschichteten Lagen. Nach der Fertigung können optische Messmethoden eingesetzt werden, da die äußere Harzschicht transparent ist.
3. Anpassung des Verarbeitungshilfsstoffs (Partikel/Farbe in Trennmittelbeschichtung des Peel Ply, Trennfolie bzw. Werkzeugtrennmittels).

### Bezugszeichenliste:

- 10: Verbundwerkstoff
- 12: Oberfläche
- 14: erster Flächenbereich
- 16: Reflektionsvorrichtung
- 18: Kontamination
- 20: Messvorrichtung
- 22: Messkopf
- 24: Auswerteeinheit
- 26: Fasern
- 28: Materialmatrix
- 30: Partikel
- 32: Reflektierende Lage
- 34: Reflektierende Schicht

## Patentansprüche

1. Verbundwerkstoff (10) umfassend Fasern (26), eine Materialmatrix (28) und eine Reflexionsvorrichtung (16), welche derart ausgebildet und angeordnet ist, dass wenigstens ein Flächenbereich einer Oberfläche des Verbundwerkstoffs (10) reflektierend ist,
**dadurch gekennzeichnet, dass**
die Reflexionsvorrichtung (16) eine reflektierende Lage (32) aufweist, die ein reflektierendes Gewebe und/oder ein reflektierender Filz ist.

2. Verbundwerkstoff 10) nach Anspruch 1, **dadurch gekennzeichnet, dass** die reflektierende Lage (2) an den Fasern (26) angeordnet ist.

3. Verbundwerkstoff (10) nach Anspruch 1 oder 2, **dadurch gekennzeichnet, dass** die reflektierende Lage (2) zwischen der Materialmatrixschicht (28) und den Fasern (26) angeordnet ist.

4. Verbundwerkstoff (10) nach einem der vorhergehenden Ansprüche, **dadurch gekennzeichnet, dass** die Materialmatrix (28) transparent ist und in der Materialmatrix (28) Partikel (30) angeordnet sind, wobei zumindest ein Teil der Partikel (30) zur Bildung der Reflektionsvorrichtung (16) eine reflektierende Oberfläche (12) aufweisen.

5. Verbundwerkstoff (10) nach Anspruch 4, **dadurch gekennzeichnet, dass** die Partikel (30) zur Bildung der reflektierenden Oberfläche (12) gefärbt und/oder beschichtet, insbesondere metallisch beschichtet, sind.

6. Verbundwerkstoff (10) nach einem der voranstehenden Ansprüche, **dadurch gekennzeichnet, dass** zur Bildung der Reflektionsvorrichtung (16) zusätzlich die Oberfläche (12) des Verbundwerkstoffs (10) reflektierend ausgebildet ist.

7. Verbundwerkstoff (10) nach Anspruch 6, **dadurch gekennzeichnet, dass** die Oberfläche (12) mit einer reflektierenden Schicht (34) versehen ist und/oder reflektierend beschichtet ist.

8. Verbundwerkstoff (10) nach Anspruch 7, **dadurch gekennzeichnet, dass** die reflektierende Schicht (34) eine Trennfolie ist.

9. Verfahren zur Detektion von Kontaminationen (18) auf einer Oberfläche (12) eines Verbundwerkstoffs (10), der Fasern (26) und eine Materialmatrix (28) aufweist, wobei das Verfahren den folgenden Schritt umfasst:
Detektieren von Kontaminationen (18) auf der Oberfläche (12) des Verbundwerkstoffs (10) mit Hilfe optischer Messverfahren durch Messen der von der Reflexionsvorrichtung (16) reflektierten Strahlung,
**dadurch gekennzeichnet,**
**dass** das Verfahren auch den Schritt des Vorsehens einer Reflektionsvorrichtung (16) in und/oder an dem Verbundwerkstoff (10) an einem ersten Flächenbereich (14) der Oberfläche (12) des Verbundwerkstoffs umfasst.

10. Verfahren nach Anspruch 9, **dadurch gekennzeichnet, dass** die optischen Messverfahren Ellipsometrie, Interferometrie, Raman-Messung, Röntgenfluoreszenz und/oder Laserfluoreszenz umfassen.

11. Verfahren nach einem der Ansprüche 9 und 10, **dadurch gekennzeichnet, dass** die Kontamination (18) ein Trennmittel ist, das bei der Herstellung des Verbundwerkstoffs (10) verwendet wird.

12. Verfahren nach einem der Ansprüche 9 bis 11, **dadurch gekennzeichnet, dass** zum Vorsehen der Reflektionsvorrichtung (16) Partikel (30) mit einer reflektierenden Oberfläche (12) hergestellt werden und in die Materialmatrix (28) eingebracht werden.

13. Verfahren nach einem der Ansprüche 9 bis 12, **dadurch gekennzeichnet, dass** zum Vorsehen der Reflektionsvorrichtung (16) die Fasern (26) mit einer reflektierenden Lage (32) bedeckt werden und anschließend die Fasern (26) mit der reflektierenden Lage (32) mit der Materialmatrix (28) versehen werden.

## Claims

1. Composite material (10) comprising fibres (26), a matrix (28) and a reflective device (16) which is configured and arranged in a manner such that at least one region of a surface of the composite material (10) is reflective,
**characterized in that**
the reflective device (16) has a reflective lamina (32) which is a reflective fabric and/or a reflective felt.

2. Composite material (10) according to Claim 1, **characterized in that** the reflective lamina (2) is adjacent to the fibres (26).

3. Composite material (10) according to Claim 1 or 2, **characterized in that** the reflective lamina (2) is arranged between the matrix layer (28) and the fibres (26) .

4. Composite material (10) according to any of the preceding claims, **characterized in that** the matrix (28) is transparent, and in the matrix (28) there are particles (30) arranged, where at least some of the particles (30) have a reflective surface (12) in order to form the reflective device (16).

5. Composite material (10) according to Claim 4, **characterized in that**, in order to form the reflective surface (12), the particles (30) have been coloured and/or a coating, in particular metallic coating, has been provided thereto.

6. Composite material (10) according to any of the preceding claims, **characterized in that**, in order to form the reflective device (16), the surface (12) of the composite material (10) is additionally configured to be reflective.

7. Composite material (10) according to Claim 6, **characterized in that** a reflective layer (34) and/or reflective coating has been provided to the surface (12).

8. Composite material (10) according to Claim 7, **characterized in that** the reflective layer (34) is a release film.

9. Method for the detection of contamination (18) on a surface (12) of a composite material (10) which comprises fibres (26) and a matrix (28), where the method comprises the following step:
detection of contamination (18) on the surface (12) of the composite material (10) with the aid of optical measurement methods via measurement of the radiation reflected by the reflective device (16),
**characterized in that**
the method also comprises the step of provision of a reflective device (16) in and/or adjacent to the composite material (10) at a first region (14) of the surface (12) of the composite material.

10. Method according to Claim 9, **characterized in that** the optical measurement methods comprise ellipsometry, interferometry, Raman measurement, X-ray fluorescence and/or laser fluorescence.

11. Method according to either of Claims 9 and 10, **characterized in that** the contamination (18) is a release agent which is used in the production of the composite material (10).

12. Method according to any of Claims 9 to 11, **characterized in that**, in order to provide the reflective device (16), particles (30) with a reflective surface (12) are produced and are introduced into the matrix (28) .

13. Method according to any of Claims 9 to 12, **characterized in that**, in order to provide the reflective device (16), the fibres (26) are covered with a reflective lamina (32), and then the matrix (28) is provided to the fibres (26) with the reflective lamina (32).

## Revendications

1. Matériau composite (10) comprenant des fibres (26), une matrice de matériau (28) et un dispositif de réflexion (16), qui est configuré et agencé de telle sorte qu'au moins une zone de surface d'une surface du matériau composite (10) soit réflective,
**caractérisé en ce que**
le dispositif de réflexion (16) comprend une couche réflective (32), qui est un tissu réflectif et/ou un feutre réflectif.

2. Matériau composite (10) selon la revendication 1, **caractérisé en ce que** la couche réflective (2) est agencée sur les fibres (26).

3. Matériau composite (10) selon la revendication 1 ou 2, **caractérisé en ce que** la couche réflective (2) est agencée entre la couche de matrice de matériau (28) et les fibres (26).

4. Matériau composite (10) selon l'une quelconque des revendications précédentes, **caractérisé en ce que** la matrice de matériau (28) est transparente, et des particules (30) sont agencées dans la matrice de matériau (28), au moins une partie des particules (30) comprenant une surface réflective (12) pour la formation du dispositif de réflexion (16).

5. Matériau composite (10) selon la revendication 4, **caractérisé en ce que** les particules (30) pour la formation de la surface réflective (12) sont colorées et/ou revêtues, notamment revêtues métalliquement.

6. Matériau composite (10) selon l'une quelconque des revendications précédentes, **caractérisé en ce que** la surface (12) du matériau composite (10) est en outre configurée sous forme réflective pour la formation du dispositif de réflexion (16).

7. Matériau composite (10) selon la revendication 6, **caractérisé en ce que** la surface (12) est munie d'une couche réflective (34) et/ou est munie d'un revêtement réflectif.

8. Matériau composite (10) selon la revendication 7, **caractérisé en ce que** la couche réflective (34) est un film de séparation.

9. Procédé de détection de contaminations (18) sur une surface (12) d'un matériau composite (10), qui comprend des fibres (26) et une matrice de matériau (28), le procédé comprenant l'étape suivante :
la détection de contaminations (18) sur la surface (12) du matériau composite (10) à l'aide de procédés de mesure optiques par mesure du rayonnement réfléchi par le dispositif de réflexion (16),
**caractérisé en ce que**
le procédé comprend également l'étape de mise en place d'un dispositif réflectif (16) dans et/ou sur le matériau composite (10) sur une première zone de surface (14) de la surface (12) du matériau composite.

10. Procédé selon la revendication 9, **caractérisé en ce que** les procédés de mesure optiques comprennent l'ellipsométrie, l'interférométrie, la mesure Raman, la fluorescence de rayons X et/ou la fluorescence laser.

11. Procédé selon l'une quelconque des revendications 9 et 10, **caractérisé en ce que** la contamination (18) est un agent de séparation, qui est utilisé lors de la fabrication du matériau composite (10).

12. Procédé selon l'une quelconque des revendications 9 à 11, **caractérisé en ce que**, pour la mise en place du dispositif de réflexion (16), des particules (30) munies d'une surface réflective (12) sont fabriquées et introduites dans la matrice de matériau (28).

13. Procédé selon l'une quelconque des revendications 9 à 12, **caractérisé en ce que**, pour la mise en place du dispositif de réflexion (16), les fibres (26) sont recouvertes avec une couche réflective (32), puis les fibres (26) comprenant la couche réflective (32) sont munies de la matrice de matériau (28).
